# EUROPEAN PATENT SPECIFICATION

(11) **EP 4 071 371 B1**
(45) Date of publication and mention of the grant of the patent: **01.01.2025**
(21) Application number: 22150121.6
(22) Date of filing: 04.01.2022
(51) Int. Cl.: F16B 25/00, F16B 25/10

(54) **SELF-DRILLING SELF-TAPPING FASTENER**
SELBSTBOHRENDES, SELBSTSCHNEIDENDES BEFESTIGUNGSELEMENT
ÉLÉMENT DE FIXATION AUTOTARAUDEUR ET AUTOPERCEUR

(30) Priority: 07.01.2021 US 202163134785 P; 08.11.2021 US 202117521442
(43) Date of publication of application: 12.10.2022
(73) Proprietor: Illinois Tool Works Inc., Glenview, IL 60025 (US)
(72) Inventor: GONG, Yongping, Glenview, 60025 (US); RIFFLE, Randall Derek, Glenview, 60025 (US); BACIU, Alex, Glenview, 60025 (US); LATZ, Mark, Glenview, 60025 (US)
(74) Representative: HGF

(56) References cited:
- EP-A1- 2 581 612
- DE-U1- 202019 101 758
- US-A- 3 786 713
- US-A- 3 789 725
- US-A- 5 755 542

## Description

### BACKGROUND

Fasteners are well known and widely used throughout the world to secure one object to another object. Various known fasteners include: (a) a head including a mechanical engaging structure engageable by a tool, (b) a shank extending from the head, and (c) a helical thread formation outwardly extending from the shank for frictionally engaging the objects into which the fastener is driven. Certain known self-drilling self-tapping fasteners have a shank that also includes a drill tip and at least one flute. The drill tip and the flute(s) enable the self-drilling self-tapping fastener to form holes in the objects into which the fastener is driven.

Patent document US 3,786,713 A describes a drilling and thread cutting screw having a drill point including generally concave surfaces forming flutes therein with discrete obstructions formed on the concave surfaces to effectively break chips produced by cutting edges in the drill point.

There is a continuing need for self-drilling self-tapping fasteners that have improvements to performance in one or more of the following categories without decreasing performance in any of the other categories: (i) drilling times; (ii) ductility; (iii) tapping torque; (iv) torsional strength; (v) tensile strength; and (vi) pullout force.

### SUMMARY

The present disclosure provides a self-drilling self-tapping fastener that has: (1) an improved performance in drilling time and specifically a relatively lower drilling time, and (2) improved performance in pullout force and specifically a relatively higher pullout force, both without decreasing performance in any of the ductility, the tapping torque, the torsional strength, and the tension strength of such self-drilling self-tapping fastener.

In various embodiments of the present disclosure, the self-drilling self-tapping fastener includes a head, a shank integrally connected to and extending from the head and including a first shank portion and a second shank portion, and a helical thread formation integrally connected to and extending radially outwardly from the first shank portion and part of the second shank portion. The second shank portion defines a longitudinally extending first flute and a longitudinally extending second flute. The first flute extends through three threads of the thread formation on a first side of the second shank portion The second flute extends through three threads of the thread formation on a second side of the second shank portion and to a fourth thread formation on the second side of the second shank portion. The second shank portion includes a first chip breaker positioned in the first flute and a second chip breaker positioned in the second flute. The second shank portion includes a drill tip. The drill tip includes a first cutting blade having a first cutting edge and a second cutting blade having a second cutting edge. The first cutting edge and the second cutting edge are tapered toward each other. The second shank portion is suitably formed such as by milling or forging in various different embodiments of the present disclosure. The head, the shank, and the helical thread formation are specifically configured and sized such that the self-drilling self-tapping fastener has improved performance in drilling time and pullout force without decreased performance in any of the ductility, the tapping torque, the torsional strength, and the tension strength of the self-drilling self-tapping fastener.

Other objects, features, and advantages of the present disclosure will be apparent from the following detailed disclosure and accompanying drawings.

### BRIEF DESCRIPTION OF THE FIGURES

Figure 1 is a side perspective view of one example embodiment of a self-drilling self-tapping fastener of the present disclosure.
Figure 2 is a first side view of the self-drilling self-tapping fastener of Figure 1.
Figure 2A is also a first side view of the self-drilling self-tapping fastener of Figure 1, identical to Figure 2 but with dimensional indicators.
Figure 2B is an enlarged fragmentary first side view of the free end part of the second shank portion of the self-drilling self-tapping fastener of Figure 1.
Figure 3 is a second side view of the self-drilling self-tapping fastener of Figure 1, with the self-drilling self-tapping fastener rotated 180 degrees from Figure 2.
Figure 3A is also a second side view of the self-drilling self-tapping fastener of Figure 1, identical to Figure 3 but with dimensional indicators.
Figure 3B is an enlarged fragmentary second side view of the end part of the second shank portion of the self-drilling self-tapping fastener of Figure 1.
Figure 4 is a third side view of the self-drilling self-tapping fastener of Figure 1, with the self-drilling self-tapping fastener rotated 90 degrees in a first direction from Figure 2.
Figure 4A is also a third side view of the self-drilling self-tapping fastener of Figure 1, identical to Figure 4 but with dimensional indicators.
Figure 5 is a fourth side view of the self-drilling self-tapping fastener of Figure 1, with the self-drilling self-tapping fastener rotated 90 degrees is an opposite second direction from Figure 2, and rotated 180 degrees from Figure 4.
Figure 6 is a bottom end view of the self-drilling self-tapping fastener of Figure 1.
Figure 6A is also bottom end view of the self-drilling self-tapping fastener of Figure 1, identical to Figure 6 but with dimensional indicators.
Figure 7 is a top end view of the self-drilling self-tapping fastener of Figure 1.
Figure 8 is a fragmentary cross-sectional view of part of the self-drilling self-tapping fastener of Figure 1 taken substantially along line 8-8 of Figure 2.
Figure 9 is Table 1 showing a general parameter comparison of the self-drilling self-tapping fastener of Figure 1 and six example commercially available self-drilling self-tapping fasteners.
Figure 10 is Table 2 showing a dimensional comparison of the self-drilling self-tapping fastener of Figure 1 and six example commercially available self-drilling self-tapping fasteners.
Figure 11 is Table 3 showing ductility test results vs core hardness for the self-drilling self-tapping fastener of Figure 1 in comparison to six example commercially available self-drilling self-tapping fasteners.
Figure 12 is Table 4 showing torsional strength vs root diameter test results for the self-drilling self-tapping fastener of Figure 1 in comparison to six example commercially available self-drilling self-tapping fasteners.
Figure 13 is Table 5 showing tensile strength vs root diameter test results for the self-drilling self-tapping fastener of Figure 1 in comparison to six example commercially available self-drilling self-tapping fasteners.
Figure 14 is Table 6 showing pullout force vs thread engagement test results for the self-drilling self-tapping fastener of Figure 1 in comparison to six example commercially available self-drilling self-tapping fasteners.
Figure 15 is Table 7 showing drilling time/tapping torque vs point geometry test results for the self-drilling self-tapping fastener of Figure 1 in comparison to six example commercially available self-drilling self-tapping fasteners.

### DETAILED DESCRIPTION

While the systems, devices, and methods described herein may be embodied in various forms, the drawings show and the specification describes certain exemplary and non-limiting embodiments. Not all components shown in the drawings and described in the specification may be required, and certain implementations may include additional, different, or fewer components. Variations in the arrangement and type of the components; the shapes, sizes, and materials of the components; and the manners of connections of the components may be made without departing from the scope of the claims Unless otherwise indicated, any directions referred to in the specification reflect the orientations of the components shown in the corresponding drawings and do not limit the scope of the present disclosure. Further, terms that refer to mounting methods, such as mounted, connected, etc., are not intended to be limited to direct mounting methods but should be interpreted broadly to include indirect and operably mounted, connected, and like mounting methods. This specification is intended to be taken as a whole and interpreted in accordance with the principles of the present disclosure and as understood by one of ordinary skill in the art.

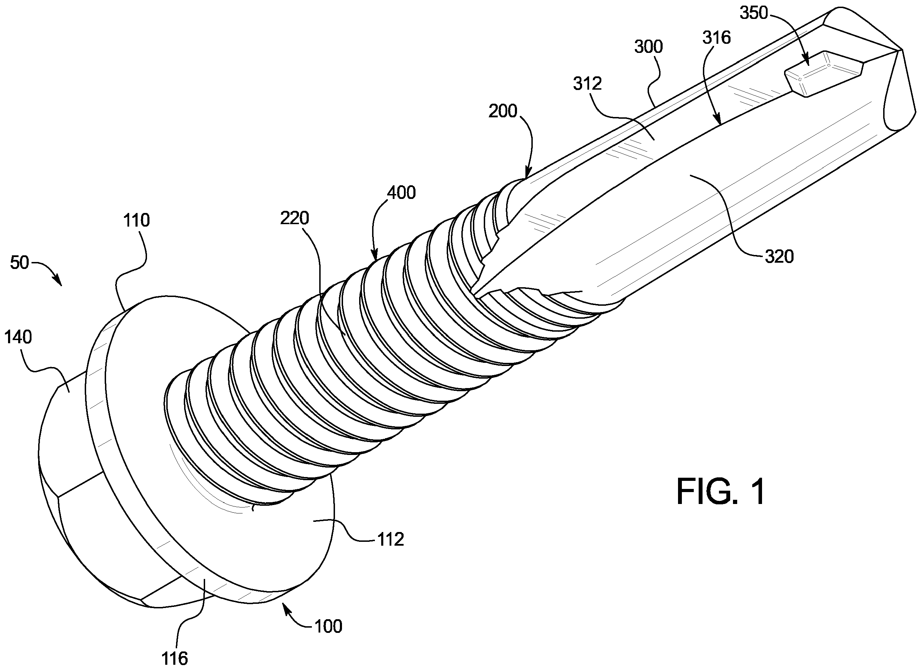

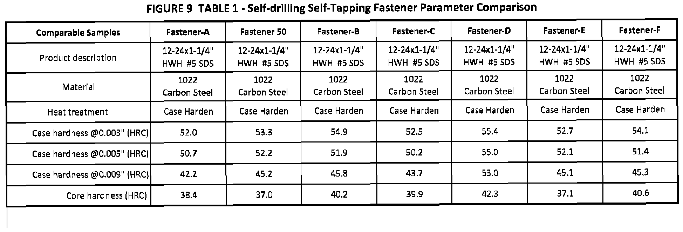

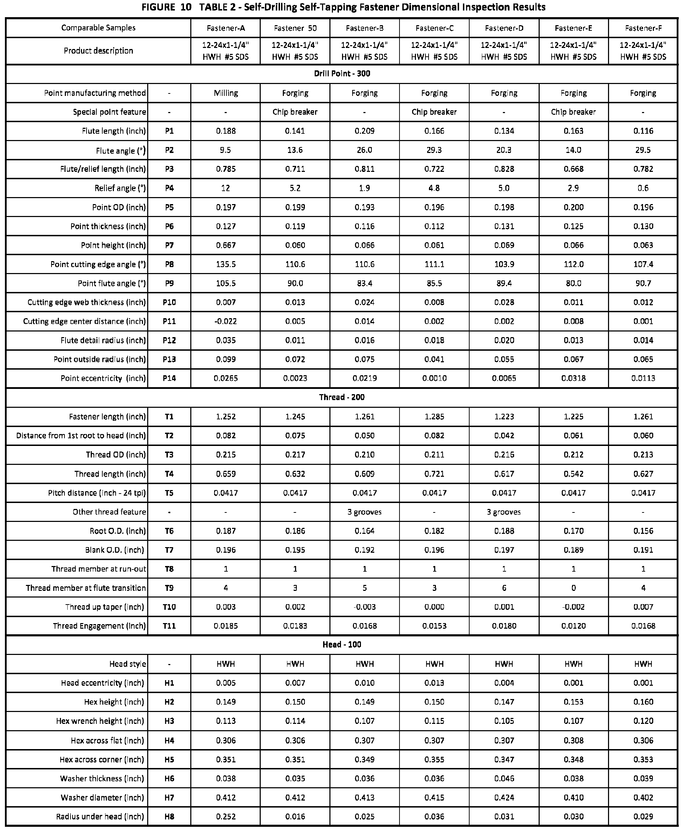

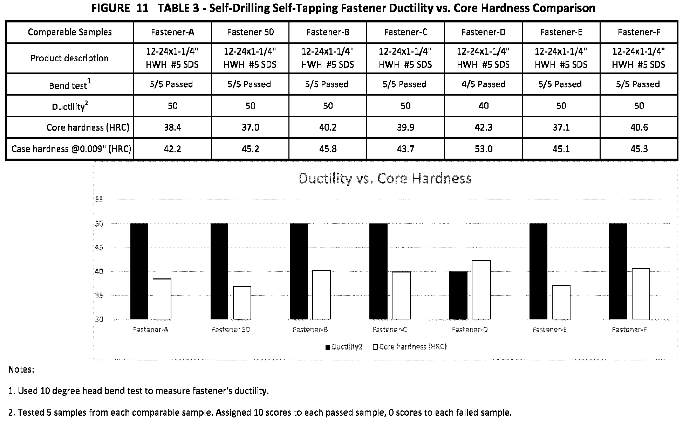

Turning now to the drawings, Figures 1, 2, 2A, 2B, 3, 3A, 3B, 4, 4A, 5, 6, 6A, 7, and 8 illustrate one example embodiment of the self-drilling self-tapping fastener of the present disclosure, generally indicated by numeral 50 and sometimes called the "fastener" herein for brevity. Figures 9 and 10 show tables comparing the features and dimensions of the self-drilling self-tapping fastener 50 to six example commercially available self-drilling fasteners. Figures 11, 12, 13, 14, and 15 show tables comparing various tests results on the self-drilling self-tapping fastener 50 to these same six example commercially available self-drilling self-tapping fasteners.

Various embodiments of the example fastener 50 are particularly configured for use in connecting steel objects (such as but not limited to connecting a 1/8 inch (0.315 cms) steel plate to a 1/4 inch (0.635 cms) steel plate). However, the fastener may be employed for a variety of different uses in accordance with the present disclosure. In this example, fastener 50 is a #12-24 x 1-1/4 inch fastener. It should be appreciated that the fastener length may vary in other alternative embodiments of the present disclosure as further discussed below.

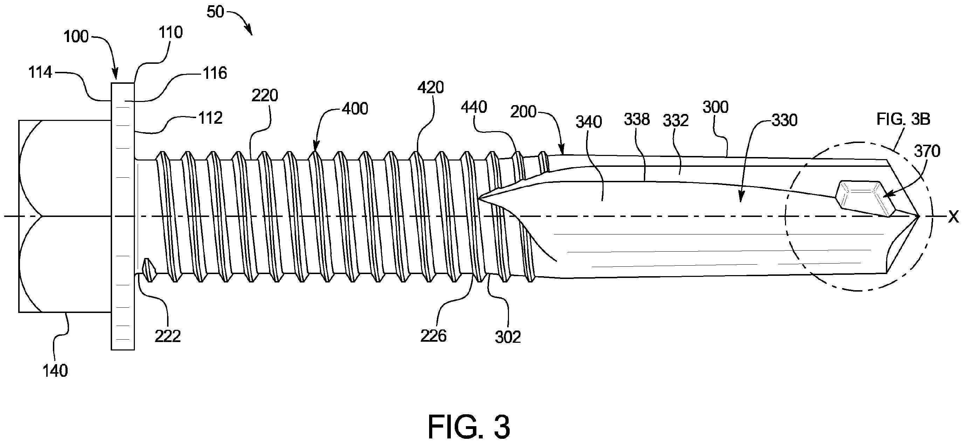

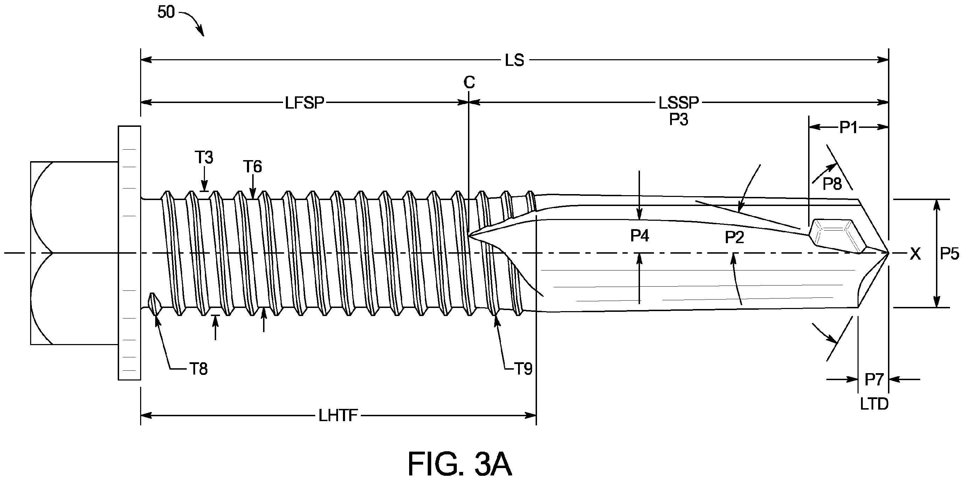

The fastener 50 has a longitudinal central axis X and includes: (a) a head 100; (b) a shank 200 integrally connected at one end to the head 100; and (c) a helical thread formation 400 integrally connected to and extending outwardly from parts of the shank 200. The shank 200 includes a first shank portion 220 integrally connected to and extending from the head 100, and a second shank portion 300 integrally connected to and extending from the first shank portion 220 opposite the head 100. Line C in Figure 3A illustrates the plane along which the first shank portion 220 is integrally connected to the second shank portion 300 in this example embodiment. The second shank portion 300 functions as the drilling portion of the shank 200 and enables the fastener 50 to be used to drill a hole in one or more objects into which the fastener 50 will be tapped, fastened and secured.

In this example embodiment, the head 100, the shank 200, and the thread formation 400 are monolithically formed. More specifically, in this example embodiment, the fastener 50 is made by: (1) cutting (or otherwise forming) a carbon steel member (not shown but further described below) that is sometimes initially called a blank having a suitable length and a suitable width; (2) then forming (such as by forging) the carbon steel member to form the head 100; (3) then forming (such as by forging or milling) the carbon steel member to form the second shank portion 300; (4) then forming (such as by roll threading) the carbon steel member to form the thread formation 400; (5) then heat treating the carbon steel member; and (6) then coating the carbon steel member with a suitable corrosion resistance coating and curing this coating on the carbon steel member. It should be appreciated that one or more suitable cleaning and/or deburring processes may be employed in accordance with the present disclosure to form the fastener 50.

It should be appreciated that the self-drilling self-tapping fastener 50 of this example embodiment is made from a low carbon steel (such as but not limited to an AISI 1022 low carbon steel). It should be also be appreciated that the heat treatment of case hardening is to provide a hardened fastener surface, so that the fastener point can self-drill into steel objects, and the thread formation can self-tap its own way to engage with steel objects. It should further be appreciated that hardened fastener surface case depth should be maintained in a reasonable range because if the case depth is too deep, it can make the fastener too brittle. It should also be appreciated that the case hardening process also provides a lower fastener core hardness, which ensures that the fastener has enough ductility. If the core hardness is too high, it will make the fastener too brittle, and become vulnerable to hydrogen embrittlement failure and/or hydrogen assisted stress corrosion. It should further be appreciated that the fastener's coating not only provides corrosion protection, but also provides lubrication when the fastener drills into one or more steel objects.

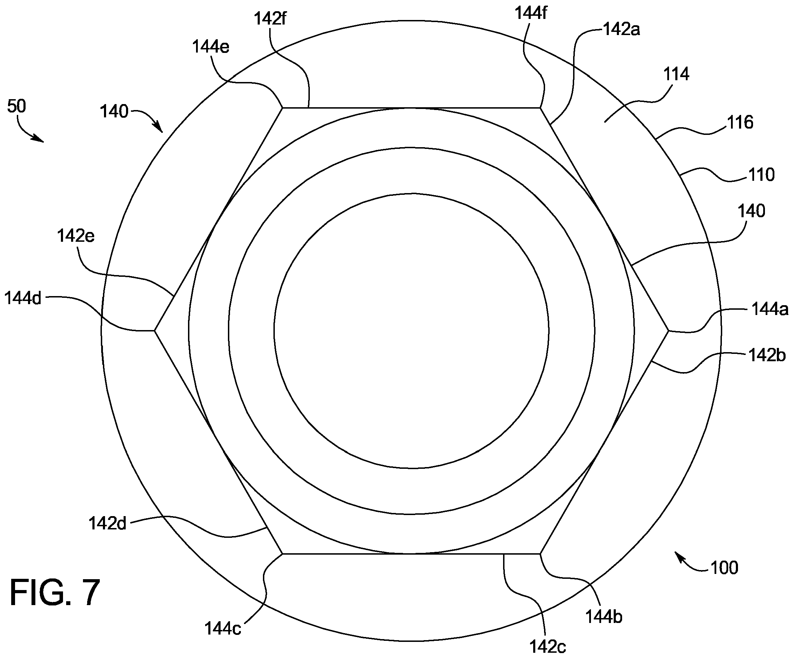

The head 100 includes a generally annular bottom portion 110 and a top portion 140 integrally connected to the bottom portion 110. The annular bottom portion 110 has an outer diameter of 0.412 inches (1.04648 cms) and a height of 0.035 inches (0.0889 cms). The annular bottom portion 110 has a bottom surface 112, a top surface 114, and a generally cylindrical outer edge 116 extending from and connect the bottom surface 112 to the top surface 114. The outer edge 116 is somewhat rounded or convex along its entire surface. The bottom portion 110 is also integrally connected to the first shank portion 220. In this example embodiment, as best shown in Figure 7, the top portion 140 of the head 100 defines an external hexagonal mechanical engaging structure having six sides 142a, 142b, 142c, 142d, 142e, and 142f that define an upper recessed portion 150. The six sides 142a, 142b, 142c, 142d, 142e, and 142f are engageable by an appropriate wrench or hex socket (not shown) configured to rotate and drive the self-drilling self-tapping fastener 50. It should be appreciated that other suitable mechanical engaging structures (not shown) may be employed in accordance with the present disclosure, such as but not limited to: (1) a straight slot (engageable by a flathead screwdriver), (2) a cross-shaped slot (engageable by a Phillips head screwdriver), (3) an internal star or six lobe shaped cavity (engageable by a six lobe driver), or (4) an internal hexagonal shaped cavity (engageable by an Allen wrench). As also best shown in Figure 7, the top portion 140 of the head 100 has six corners 144a, 144b, 144c, 144d, 144e, and 144f, respectively between sides 142a and 142b, 142b and 142c, 142c and 142d, 142d and 142e, 142e and 142f, and 142f and 142a.

In this example embodiment, the top portion 140 of the head 100 has a height of 0.150 inches (0.381 cms). The top portion 140 has an outer diameter of 0.306 inches (0.77724 cms) from side 142a to side 142d, from side 142b to side 142e, and from side 142c to side 142f. The top portion 140 has an outer diameter of 0.351 inches (0.89154 cms) from corner 144a to corner 144d, from corner 144b to corner 144e, and from corner 144c to corner 144f.

The shank 200 has a length (LS) indicated in Figure 3A, which in this example embodiment is 1.245 inches (3.162 cms), and includes: (1) the first shank portion 220; and (2) the second shank portion 300.

The first shank portion 220 is integrally connected to the head 100 at an inner end 222 and is integrally connected to the second shank portion 300 at an outer end 226. The first shank portion 220 is annular and has a constant outer diameter (OD) from the inner end 222 (adjacent to the head 100) to the outer end 226 (adjacent to the second shank portion 300). This outer diameter in this example embodiment is 0.214 inches (0.544 cms). The first shank portion 220 has a length (LFSP) as indicated in Figure 3A and which in this example embodiment is 0.632 inches (1.605 cms).

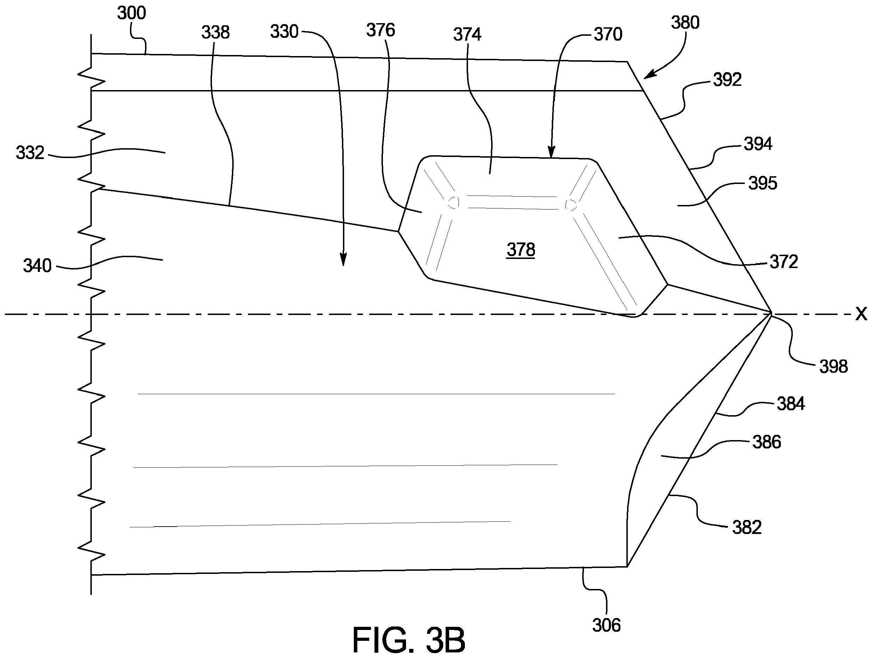

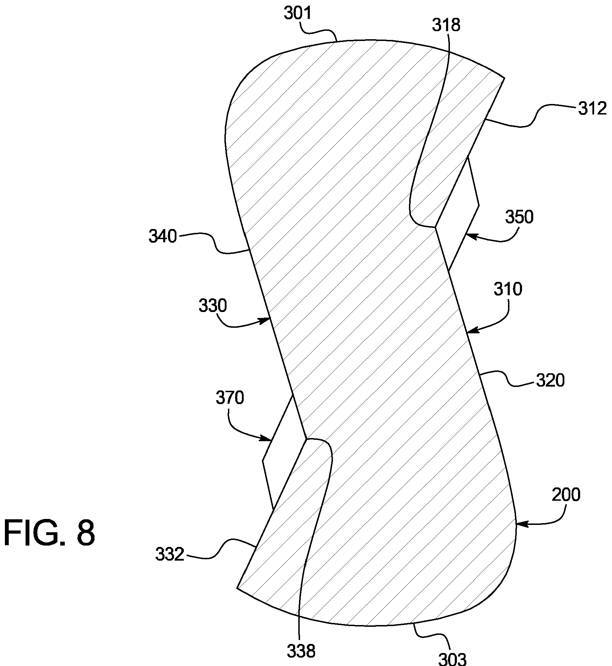

The second shank portion 300 includes an inner end 302 that is integrally connected to the first shank portion 220 and an outer end 306. The outer end 306 is a free end and includes a drill tip 380 as described below. The second shank portion 300 is configured to enable the fastener 50 to be self-drilling. In particular, the second shank portion 300: (1) defines a longitudinally extending first flute 310 (best seen in Figures 1, 2, 2A, 2B, and 8); (2) defines a longitudinally extending second flute 330 (best seen in Figures 3, 3A, 3B, and 8); (3) includes a first chip breaker 350 (best seen in Figures 1, 2, 2A, 2B, and 8); (4) includes a second chip breaker 370 (best seen in Figures 3, 3A, 3B, and 8); and (5) includes the drill tip 380.

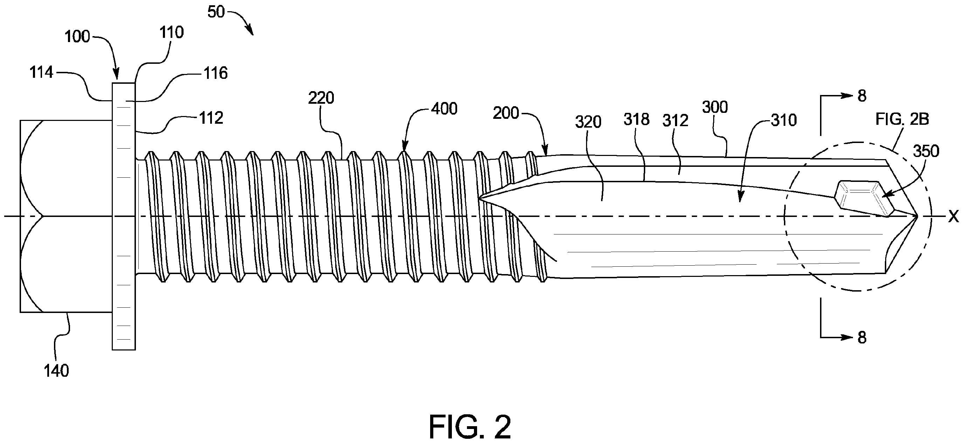

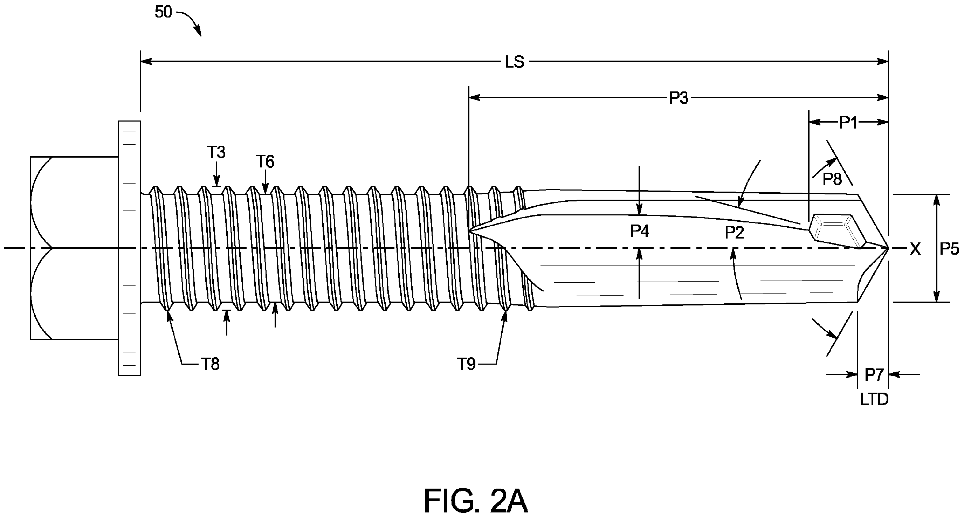

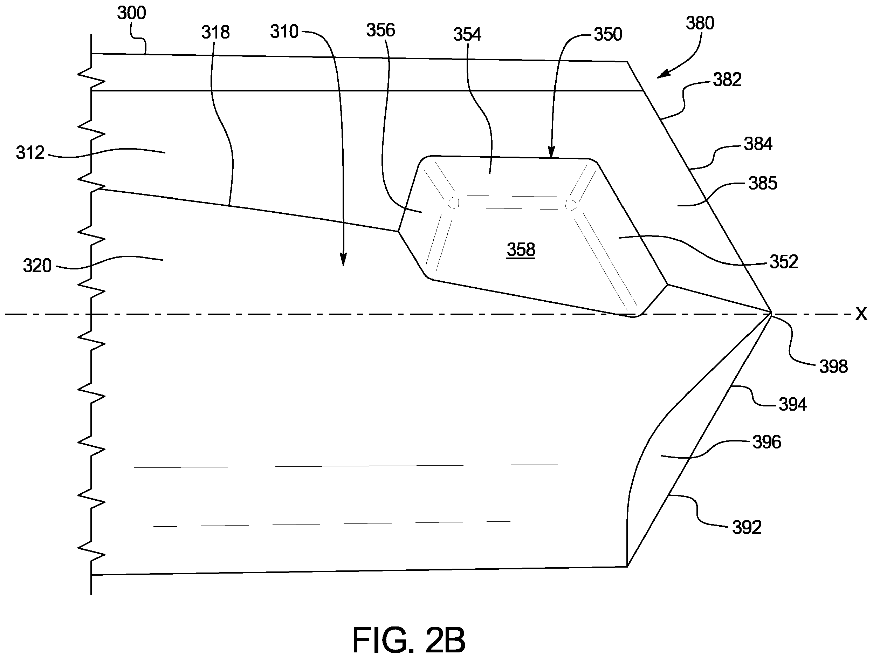

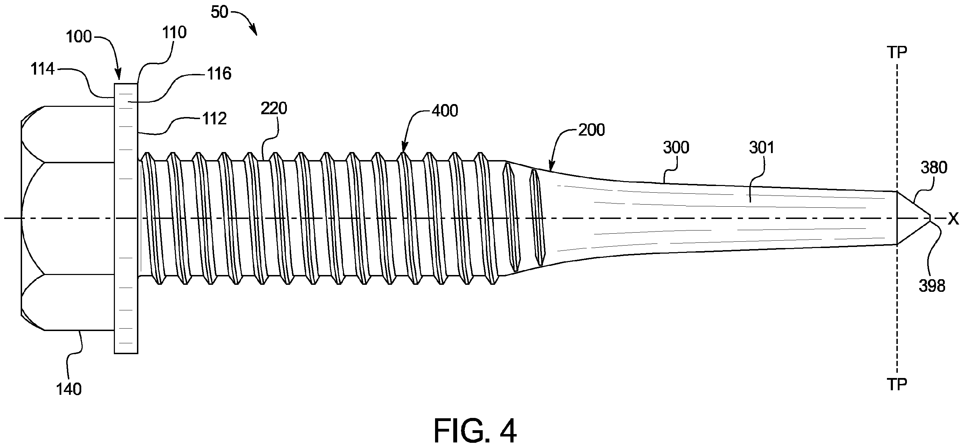

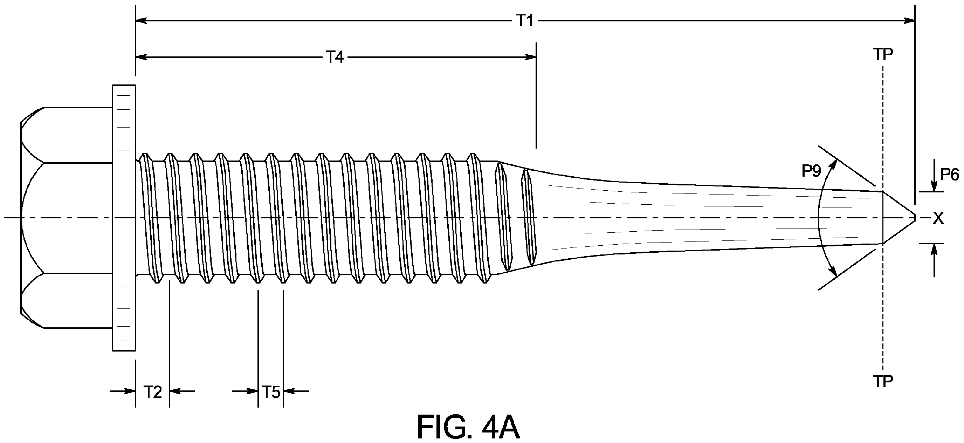

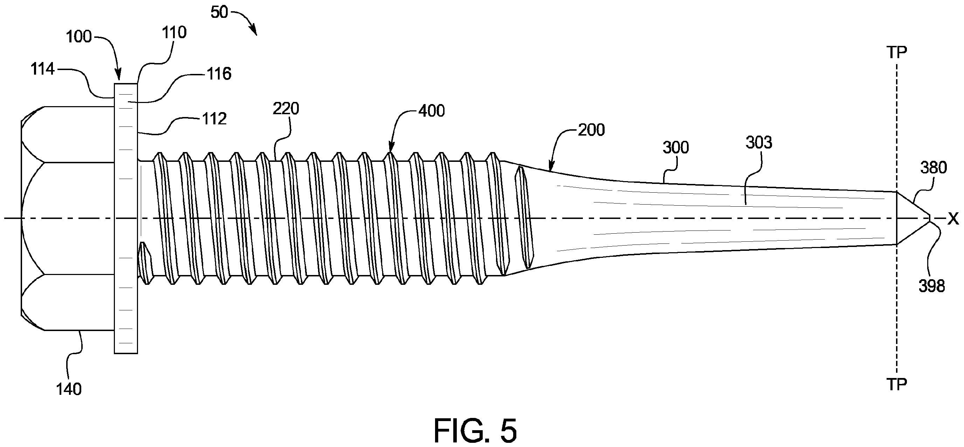

The second shank portion 300 is partially annular and has multiple different outer surfaces and outer diameters, as further described below. In this example embodiment, the second shank portion 300 has a length (LSSP) indicated in Figure 3A, and which in this example embodiment is 0.711 inches (1.806 cms). When viewed from the side shown in Figures 1, 2, 2A, and 2b, and the side shown in Figures 3, 3A, and 3B, the second shank portion 300 has a first constant outer diameter until reaching the drill tip 380. When viewed from the side shown in Figures 4 and 4A, and the side shown in Figure 5, the second shank portion 300 has a first decreasing outer width, until reaching the drill tip 380. This decreasing outer width first decreases as at a greater angle and then decreases at a smaller angle. The elongated opposite outer surfaces 301 and 303 of the second shank portion 300 are rounded or convex and extend between the respective opposite flutes 310 and 330.

The first flute 310 defined in the second shank portion 300 includes a longitudinally extending first surface 312 and a longitudinally extending second surface 320. The longitudinally extending first surface 312 and the longitudinally extending second surface 320 meet along a longitudinally extending connection line 318 (best seen in Figures 2, 2A, 2B, and 8). The first flute 310 narrows almost to a point at the first end 302 of the second shank portion 300, widens toward the central section (not labeled) of the second shank portion 300, and remains wide through the drill tip 380 to the second end 306 of the second shank portion 300 (as best seen in Figures 1, 2, 2A, and 2B).

Likewise, the second flute 330 defined in the second shank portion 300 includes a longitudinally extending first surface 332 and a longitudinally extending second surface 340. The longitudinally extending first surface 332 and the longitudinally extending second surface 340 meet along a longitudinally extending connection line 338 (best seen in Figures 3, 3A, 3B, and 8). The second flute 330 narrows almost to a point at the first end 302 of the second shank portion 300, widens toward the central section (not labeled) of the second shank portion 300, and remains wide through the drill tip 380 to the second end 306 of the second shank portion 300 (as best seen in Figure 3, 3A, and 3B).

The first and second flutes 310 and 330 provide part of the self-drilling functionality of the fastener 50, and particularly provide areas for the debris cut by the drill tip 380 and the chip breakers 350 and 370 to move along the length of the shank 200 of the fastener 50 and out of the hole(s) being formed by the fastener 50 in the objects to which the fastener will be tapped, fastened, and secured.

For each flute 310 and 330, the flute length in this example embodiment is 0.141 inches (0.35814 cms). This is indicated by the P1 indications on Figures 2A and 3A and on Table 2 (Figure 10). It should be appreciated that this length is 0.060 inches (0.1524 cms) longer than the flute length of example Fastener-A as shown in Figure 10. This longer flute length in part enables the fastener 50 to be drilled through one or more thicker objects.

For each flute 310 and 330, the flute angle in this example embodiment is 13.6 degrees at one or more designated points along each respective flute. This is indicated by the P2 indications on Figures 2A and 3A and on Table 2 (Figure 10).

For each flute 310 and 330, the flute relief length in this example embodiment is 0.711 inches (1.80594 cms). This is indicated by the P3 indication on Figure 2A and on Table 2 (Figure 10).

As best shown in Figure 2B, the first chip breaker 350 of the second shank portion 300 includes first, second, third, and fourth connected surfaces 352, 354, 356, and 358 positioned in the flute 330 adjacent the second end 306 of the second shank portion 300. Likewise, as best shown in Figure 3B, the second chip breaker 370 of the second shank portion 300 includes first, second, third, and fourth connected surfaces 372, 374, 376, and 378 positioned in the flute 360 adjacent the second end 306 of the second shank portion 300. These chip breakers 350 and 370 of the second shank portion 300 reduce tapping torque by cutting chips into smaller pieces from the object(s) that the fastener 50 is/are tapping into, which in turn reduces jamming. The chip breakers 350 and 370 thus provide part of the self-drilling functionality of the fastener 50, and particularly function with the drill tip 380 to form the hole(s) in the object(s) being formed by the fastener 50 in the object(s) to which the fastener will be tapped, fastened, and secured.

The drill tip 380 of the second shank portion 300 extends from a transition plane indicated by dotted reference line TP shown in Figures 4, 4A, and 5 to the drill tip point 398. The drill tip 380 has a length (LDT) or point height P7 indicated in Figures 2A and 3A and on Table 2 (Figure 10) which in this example embodiment is 0.060 inches (0.1524 cms).

As best shown in Figures 2, 2A, 2B, 3, 3A, and 3B, the drill tip 380 includes: (1) a first cutting blade 382 having a first cutting edge 384, a first cutting surface 385, and an outer surface 386; and (2) a second cutting blade 392 having a second cutting edge 394, a first cutting surface 395, and an outer surface 396. The first cutting blade 382 and the second cutting blade 392 are tapered toward each other and specifically the first cutting edge 384 and the second cutting edge 394 are tapered toward each other.

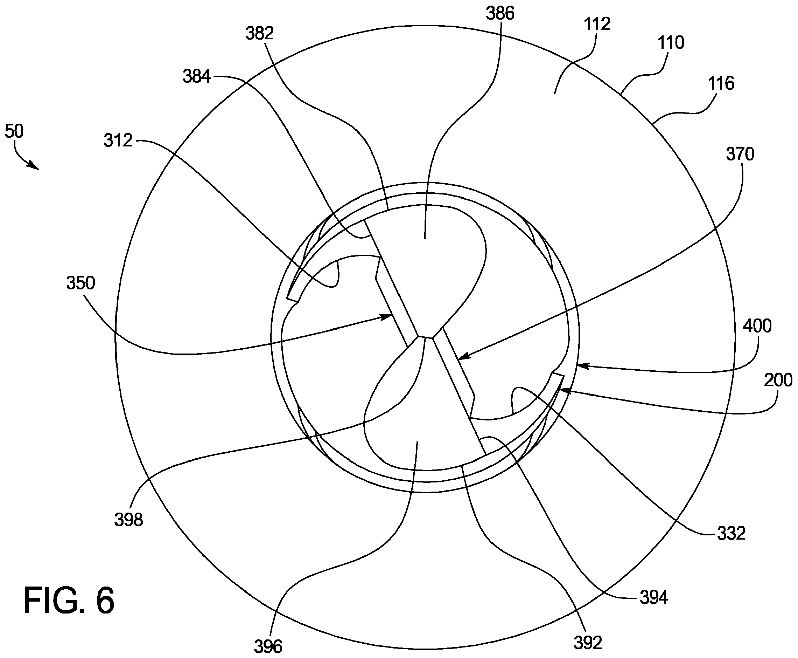

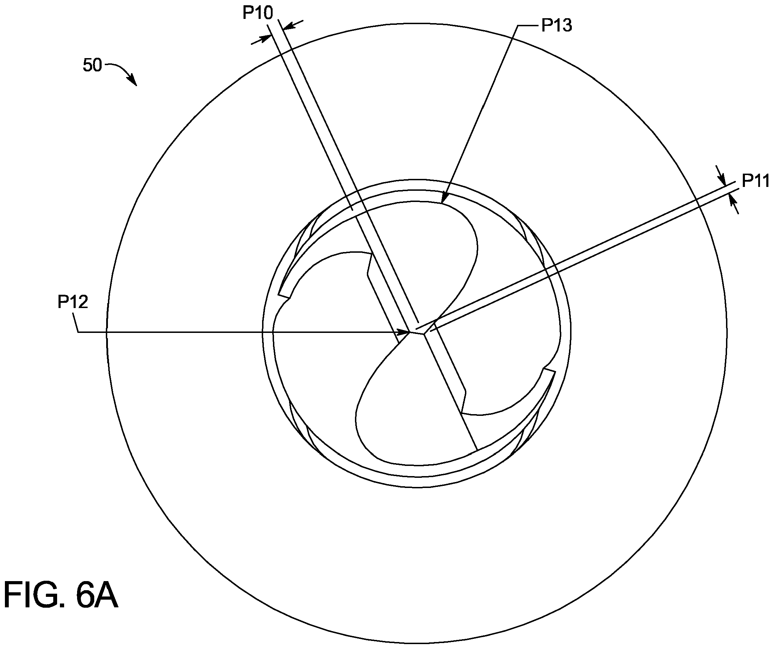

The outer diameter of the drill tip 380 decreases moving along the longitudinal axis X in the direction of or toward the pointed end 398 from: (1) a point outer diameter (OD) adjacent the transition plane TP of 0.199 inches (0.50546 cms) indicated by the P5 indication on Figures 2A and 3A, to (2) an outer diameter of 0.005 inches (0.013 cms) at the drill point 398 indicated by the P11 indication on Figure 6A.

As best shown in Figures 2A and 3A, the first cutting edge 284 extends at an angle P8 to the outer surface of the second shank portion 300. The second cutting edge 294 also extend at an angle P8 to the outer surface of the second shank portion 300. In this example embodiment, P8 which is called the point cutting edge angle is 110.6 degrees.

It should be appreciated that in this example embodiment, the drill tip 380 has a rounded point (and particularly a slightly rounded point). In certain embodiments, the drill tip 380 point is formed as a sharp point and slightly rounded during a finishing manufacturing process. In other embodiments, the drill tip 380 is otherwise suitably rounded or formed. In other embodiments of the present disclosure, the drill tip 380 is not rounded but rather formed with a sharp point.

It should also be appreciated that in this example embodiment, the drill tip 380 is preferably directly positioned along the longitudinal axis X as shown in Figures 2, 2B, 3, and 3B, but may slightly vary from being along the longitudinal axis due to manufacturing tolerances.

The relief angle of the drill tip 380 in this example embodiment is 5.2 degrees. This is indicated by the P4 indication on Figures 2A and 3A and on Table 2 (Figure 10).

The point thickness of the drill tip 380 in this example embodiment is 0.119 inches (0.30226 cms). This is indicated by the P6 indication on Figure 4A and on Table 2 (Figure 10).

The point flute angle of the drill tip 380 in this example embodiment is 90.0 degrees. This is indicated by the P9 indication on Figure 4A and on Table 2 (Figure 10).

The drill point's web thickness of the drill tip 380 in this example embodiment is 0.013 inches (0.03302 cms). This is referred to herein as the drill point web thickness. This is indicated by the P10 indication on Figure 6A and on Table 2 (Figure 10).

The center distance of the drill tip 380 in this example embodiment is 0.005 inches (0.0127 cms). This is indicated by the P11 indication on Figure 6A and on Table 2 (Figure 10).

The flute detail radius of the drill tip 380 in this example embodiment is 0.011 inches (0.02794 cms). This is indicated by the P12 indication on Figure 6A and on Table 2 (Figure 10).

The point outside radius of the drill tip 380 in this example embodiment is 0.072 inches (0.18288 cms). This is indicated by the P13 indication on Figure 6A and on Table 2 (Figure 10).

The point eccentricity or total indicator reading (TIR) of the drill tip 380 in this example embodiment is 0.0023 inches (0.0058 cms) (but can be up to 0.005 inches (0.0127 cms) due to manufacturing tolerances) in accordance with the present disclosure. This is indicated by the P14 indication on Table 2 (Figure 10). It should be appreciated that for the purposes of the present disclosure, the point eccentricity or TIR is the difference between the maximum and minimum measurement readings of an indicator on the planar or cylindrical contoured surfaces of the drill tip 380 representing its/their respective amount(s) of deviation from flatness or roundness. It should also be appreciated that the extremely low point eccentricity or TIR of the drill tip 380 of the present disclosure maximizes the rotation of the second shank portion 300 with minimal deviation from along the longitudinal center axis X of the first and second shank portions 200 and 300 of fastener 50. In various embodiments, this extremely low point eccentricity or TIR of the drill tip 380 is at least partially achieved in the fastener 50 by forging the second shank portion 300 of the fastener 50, but it should be appreciated that such extremely low point eccentricity or TIR of the drill tip 380 could alternatively be achieved in the fastener 50 by milling the second shank portion 300 of the fastener 50 with extremely tight manufacturing tolerances. This configuration of the drill tip 380 and the second shank portion 300 is at least partially responsible for the relatively lower drilling time provided by the fastener 50 of the present disclosure. This configuration provides a more precise tapped thread (and/or slightly smaller hole(s)) in the object(s) in which the fastener 50 is tapped, fastened, and secured. This more precise tapped thread in the object(s) in combination with the enhanced thread engagement provided by the thread formation 400 (as described below) of the fastener 50 is considered to be at least partially responsible for the relatively higher pullout force provided by the fastener 50 of the present disclosure.

The helical thread formation 400 is integrally connected to and extends radially outwardly from respective sections of both the first and second portions 220 and 300 of the shank 200. In this illustrated embodiment, the helical thread formation 400 extends along substantially the entire first shank portion 220 and an initial part of the second shank portion 300. The helical thread formation 400 includes: (1) a first helical thread portion 420; and (2) a second helical thread portion 440.

The helical thread formation 400 has a substantially constant outer diameter from start of the thread formation 400 adjacent to the head 100 to almost the end of the thread formation 400 on the second shank portion 300. At the third thread from the end of the thread formation 400 on the second shank portion 300, the outer diameter or height of the thread formation 400 begins to decrease until gradually terminating at the outer surface of the second shank portion 300. In other words, once reaching that point, the outer diameter of the thread formation 400 tapers radially inwardly until reaching the outer surface of the second shank portion 300.

The helical thread formation 400 has a length (LHTF) indicated on Figure 3A which in this example embodiment is 0.659 inches (1.67386 cms). This is also indicated by the T4 indication on Figure 4A and in Figure 10 Table 2.

The root diameter to the head of the helical thread formation 400 in this example embodiment is 0.075 inches (0.1905 cms). This is indicated by the T2 indication on Figure 4A and on Table 2 (Figure 10).

The thread outer diameter (OD) of the helical thread formation 400 in this example embodiment is 0.217 inches (0.55118 cms). This is indicated by the T3 indication on Figures 2A and 3A and on Table 2 (Figure 10).

The pitch distance of the helical thread formation 400 in this example embodiment is 12-24 tpi (and preferably 24 threads per inch (9.449 threads per cm). This is indicated by the T5 indication on Figure 4A and on Table 2 (Figure 10).

The root outer diameter (OD) of the helical thread formation 400 in this example embodiment is 0.186 inches (0.47244 cms). This is indicated by the T6 indication on Figures 2A and 3A and on Table 2 (Figure 10).

The blank outer diameter (OD) of the helical thread formation 400 in this example embodiment is 0.195 inches (0.4953 cms). This is indicated by the T7 indication on Table 2 (Figure 10).

The thread at run-out of the helical thread formation 400 in this example embodiment is 1 thread, which means the thread outer diameter gradually decreased and merges with shank. This is indicated by the T8 indication on Figures 2A and 3A and on Table 2 (Figure 10).

The quantity of threads of the helical thread formation 400 that are adjacent the flutes in this example embodiment is 3 threads. This is indicated by the T9 indication on Figures 2A and 3A and on Table 2 (Figure 10).

The thread up taper of the helical thread formation 400 in this example embodiment is 0.002 (0.00508 cms). This is indicated by the T10 indication on Table 2 (Figure 10).

As mentioned above, the fastener 50 of the present disclosure provide a plurality of advantages. These advantages are shown in the tables discussed below. These tables are based on actual comparison tests on six commercially available self-drilling self-tapping fasteners and the fastener 50. More specifically, as shown in Tables 1, 2, 3, 4, 5, 6, and 7 respectively provided in Figures 9, 10, 11, 12, 13, 14, and 15, the fastener 50 has: (1) an improved performance in drilling time and specifically a relatively lower drilling time, and (2) an improved performance in pullout force and specifically a relatively higher pullout force, both without decreasing performance in any of the ductility, the tapping torque, the torsional strength, and the tension strength of the fastener 50, in comparison to such other fasteners.

More specifically, Table 3 of Figure 11 shows ductility test results for the self-drilling self-tapping fastener 50 of Figure 1 in comparison to six example commercially available self-drilling self-tapping fasteners. Table 3 shows that the ductility of the fastener 50 is not different than the ductility of the six commercial fasteners. It should be appreciated that suitable fastener ductility is necessary to avoid hydrogen embrittlement failure, hydrogen assisted stress corrosion failure, and the effects of thermal expansion and contraction of the objects in which the fastener is tapped, fastened, and secured. It should be also be appreciated that industrial standards use suitable bend tests to evaluate a fastener's ductility. As shown in Table 3 of Figure 1, the tests used to test the ductility of the fasteners tested was a 10 degree head bend test, and. five samples of each fastener were tested. All samples passed the 10 degree bend test except the Fastener-D sample. The failure appears to be due to such fasteners having a higher core hardness and a deeper case. It should thus be appreciated that core hardness and case depth are the two more important factors that determine the fastener's ductility.

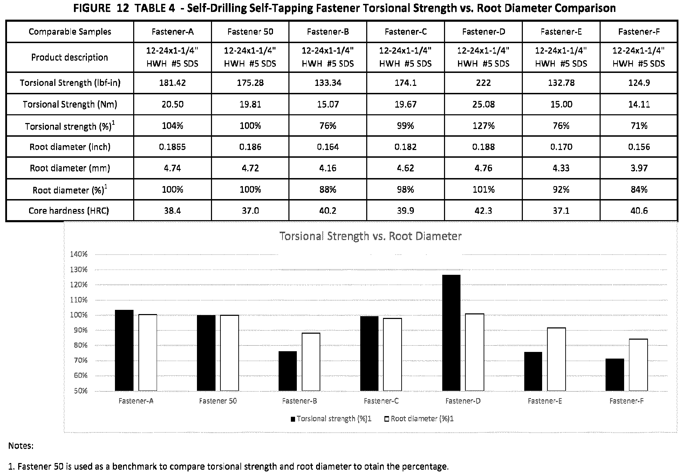

Table 4 of Figure 12 shows torsional strength vs root diameter test results for the self-drilling self-tapping fastener 50 of Figure 1 in comparison to six commercially available self-drilling self-tapping fasteners. Table 4 shows that the torsional strength of the fastener 50 has the best torsional strength comparing to six commercial fasteners except the Fastener-D sample. It should be appreciated that in addition to material and heat treating, root diameter is one of the more important factors that determines a fastener's torsional strength (i.e., typically, the larger of root diameter, the higher of the torsional strength). It should also be appreciated that, as shown in Table 4, the root diameter of Fastener-B, Fastener-A, and Fastener-F are 88%, 92%, and 84% of the fastener 50, respectively, so their respective torsional strengths are lower than that of the fastener 50, and only 76%, 76%, and 71% of the fastener 50. It should also be appreciated that the Fastener-D has the highest torsional strength, not only because its root diameter is similar (101%) to the fastener 50, but also because it has the highest core hardness. It should be appreciated that higher core hardness will provide higher torsional strength, but high core hardness will reduce fastener's ductility as mentioned above regarding ductility. Fastener-A has a similar root diameter as fastener 50, so it has a good optimum balance of tensile strength and ductility. To reach the optimum balance of ductility and torsional strength, fastener 50 has a root diameter in the range of 0.183-0.189 inches (0.46482 to 0.48006 cms).

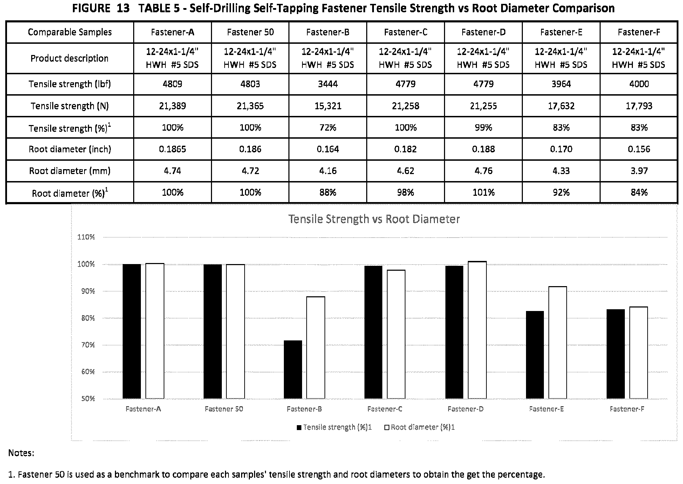

Table 5 of Figure 13 shows tensile strength vs root diameter test results for the self-drilling self-tapping fastener 50 of Figure 1 in comparison to six commercially available self-drilling self-tapping fasteners. Table 5 shows that the fastener 50 has the best tensile strength comparing to six commercial fasteners. It should also be appreciated that in addition to material and heat treating, root diameter is the more important factor that determines fastener's tensile strength (e.g., generally the larger the root diameter, the higher of the tensile strength). As Table 5 shows, the root diameter of Fastener-B, Fastener-A, and Fastener-F are 88%, 92%, and 84% of the fastener 50, respectively, so their respective tensile strengths are lower than the fastener 50, and only 72%, 82% and 83% of the fastener 50. On the other hand, Fastener-A has a similar root diameter as fastener 50, so it also has a comparable tensile strength. To reach the best performance of fastener tensile strength, the fastener 50 has a root diameter in the range of 0.183 to 0.189 inches (0.46482 to 0.48006 cms).

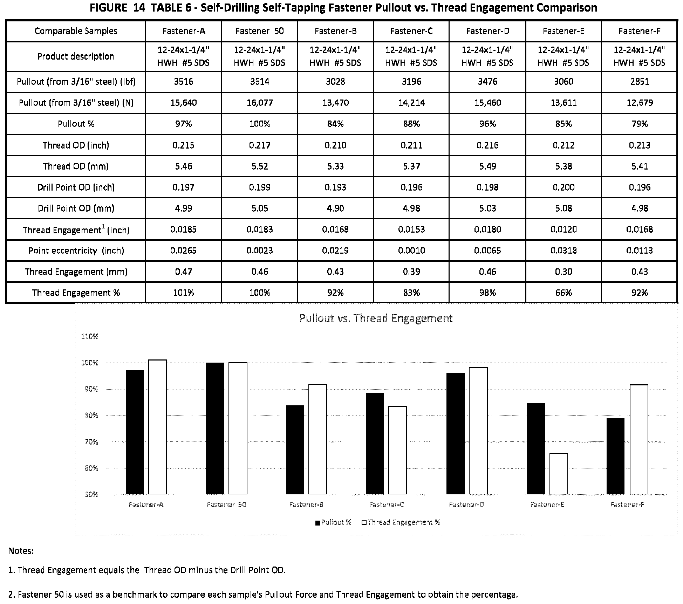

Table 6 of Figure 14 shows pullout vs thread engagement test results for the self-drilling self-tapping fastener 50 of Figure 1 in comparison to six commercially available self-drilling self-tapping fasteners. If fastener material, heat treatment, and thread profile are the same, screw thread engagement with the substrate, or the difference of thread OD and drill point OD, appears to be the more important factor that determines the fastener pullout value from the substrate (e.g., the larger the difference, the higher of the pullout value). However, the larger the difference, the harder it is for the threads to tap into the substrate, and thus the higher the tapping torque. Table 6 shows that the fastener 50 has the best pullout performance, followed by Fastener-A and Fastener-D that respectively have 97% and 96% of the pullout value of Fastener 50. Fastener-D has 98% of thread engagement of fastener 50, so it has 96% of the pullout value of fastener 50. Fastener-A has a little larger thread engagement (101%) than fastener 50, but a little lower pullout force (97%) than fastener 50 because Fastener-A has a larger point eccentricity, so the actual hole size Fastener-A drilled is larger than the point OD, which reduced its pullout value. Fastener-B, Fastener-C, Fastener-A, and Fastener-F have much lower pullout values (84%, 88%, 85%, 79%, respectively) since their thread engagements are also smaller (92%, 83%, 66%, 92% compared to fastener 50). Table 6 thus shows that the pullout force of the fastener 50 is significantly higher than the pullout force of each of the six commercial fasteners. It should be appreciated that if the fastener material, heat treatment, and thread profile are the same, the thread engagement with the steel object or the difference of thread OD and drill point OD thus appear to be the more important factor(s) that determine the fastener pullout value from an object (e.g., generally the larger of the difference the higher of the pullout value). It should further be appreciated that the larger the difference, the harder for the threads to tap into the object(s), or the higher the tapping torque will be. It should also be appreciated from Table 6 that the fastener 50 has the best pullout value in part due to the thread engagement of around 0.018 inches (0.046 cms). To reach the best pullout performance and a reasonable drill tapping torque, the fastener 50 has a thread engagement in the range of 0.018 to 0.019 inches (0.0457 to 0.0483 cms), and the drill point eccentricity is less than 0.005 inches (0.00127 cms). It should be appreciated that this drill point eccentricity may be achieved via forging the second shank portion 300 or by milling this second shank portion with tight manufacturing tolerances.

It should further be appreciated that to reach the best pullout performance and at the same time to keep the tapping torque at a reasonable low level, the fastener 50 has a second shank portion 300 with the combination of the chip breakers and the thread formation 400 with only 3 threads at the flute transition section on one side of the fastener 50.

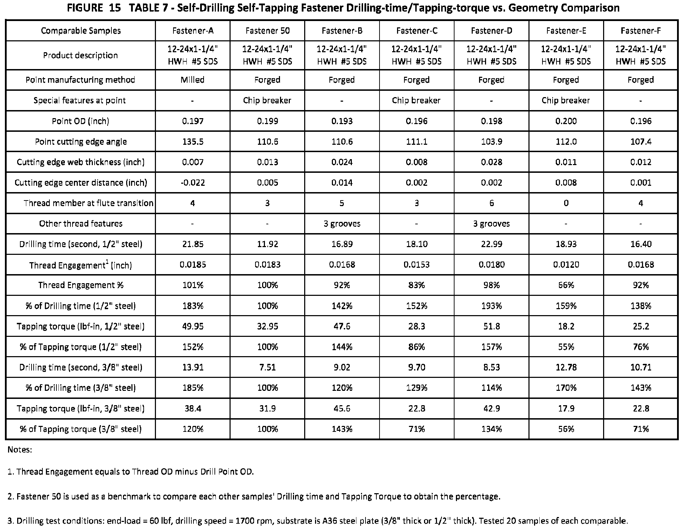

Table 7 of Figure 15 shows drilling time/torque vs point geometry test results for the self-drilling self-tapping fastener 50 of Figure 1 in comparison to six commercially available self-drilling self-tapping fasteners for both tests on 3/8 inch thick steel plate and ½ inch thick steel plate,. As mentioned above, Table 7 shows that the drilling time of the fastener 50 is significantly lower than the drilling times of each of the six commercial fasteners. These comparisons show that drill point geometry is an important factor that determines drilling time. Generally, the sharper the drill point is, the faster it can drill into a steel substrate, and the less drilling time is needed to drill through the steel substrate. However, since the self-drilling self-tapping fastener 50 must be able to drill through at least ½ inch thick steel plate, if the drill point is too sharp, it will be worn easily, and then cannot drill through such substrate or may need more time to do so. Thus, the drill point sharpness of the fastener 50 appears to be important in obtaining this lowest drilling time. The fastener 50 has a cutting edge center distance in the range of 0.003 inches to 0.005 inches, a drill point web thickness in the range of 0.010 inches to 0.015 inches, and a point cutting edge angle in the range of 109 to 111 degrees. These features appear to provide the fastener 50 with this significantly lower drilling time. It should be appreciated from the above that the fastener 50 has: (1) an improved performance in drilling time and specifically a relatively lower drilling time, and (2) an improved performance in pullout force and specifically a relatively higher pullout force, all without decreasing performance in any of the comparative ductility, tapping torque, torsional strength, or tension strength of the fastener 50, when compared to various known commercially available self-drilling self-tapping fasteners of the similar size and form.

It should be appreciated that the above dimensions are subject to reasonable variation due to manufacturing tolerances in accordance with the present disclosure. It should also be appreciated that the above dimensions are based on actual measurements and thus take into account manufacturing tolerances. It should further be appreciated that the actual designed dimensions may be different and result in such actual manufacturing tolerances in accordance with the present disclosure.

In further embodiments of the present disclosure, the fastener length may vary. In one example alternative embodiment, the fastener is a #12-24 x 1-1/2 inch fastener and is ¼ inches longer than fastener 50. In another example alternative embodiment, the fastener 50 is a #12-24 x 1-3/4 inch fastener and is 1/2 inches longer than fastener 50. In another example alternative embodiment, the fastener 50 is a #12-24 x 2.0 inch fastener and is 3/4 inches longer than fastener 50. In these example alternative embodiments, the respective thread lengths have increased by a ¼ inch, a ½ inch, and ¾ inches for each of above respective fasteners, but the other dimensions are identical.

It will be understood that modifications and variations may be effected without departing from the scope of the novel concepts of the present invention, and it is understood that this application is to be limited only by the scope of the claims.

## Claims

1. A self-drilling self-tapping fastener (50) comprising:
a head (100);
a shank (200) integrally connected to and extending from the head, the shank including a first shank portion (220) and a second shank portion (300), the second shank portion defining a longitudinally extending first flute (310), the second shank portion defining a longitudinally extending second flute (330), the second shank portion including a first chip breaker (350) positioned in the first flute, the second shank portion including a second chip breaker (370) positioned in the second flute, the second shank portion including a drill tip (380), the drill tip including a first cutting blade (382) having a first cutting edge (384) and a second cutting blade (392) having a second cutting edge (394), wherein the first cutting edge and the second cutting edge are tapered toward each other; and
a helical thread formation (400) integrally connected to and extending radially outwardly from the first shank portion and part of the second shank portion,
**characterized in that** the first flute (310) extends through three threads of the thread formation (400) on a first side of the second shank portion (300), but not to the fourth thread on the first side of the second shank portion.

2. The self-drilling self-tapping fastener (50) of Claim 1, wherein the second flute (330) extends through three threads of the thread formation (400) on a second side of the second shank portion (300) and to but not through a fourth thread formation on the second side of the second shank portion.

3. The self-drilling self-tapping fastener (50) of Claim 1, wherein the second shank portion (300) is forged.

4. The self-drilling self-tapping fastener (50) of Claim 1, wherein the first flute (310) includes a longitudinally extending first surface (312) and a longitudinally extending second surface (320) that meet along a longitudinally extending connection line (318), wherein the first flute narrows almost to a point at a first end (302) of the second shank portion (300), widens toward a central section of the second shank portion, and remains wide through the drill tip (380) to a second end (306) of the second shank portion, wherein the second flute (330) includes a longitudinally extending first surface (332) and a longitudinally extending second surface (340) that meet along a longitudinally extending connection line (338), wherein the second flute narrows almost to a point at the first end of the second shank portion, widens toward the central section of the second shank portion, and remains wide through the drill tip to the second end of the second shank portion.

5. The self-drilling self-tapping fastener (50) of Claim 1, wherein the drill tip (380) has a cutting edge center distance in the range of 0.003 inches (0.00762 cm) to 0.005 inches (0.0127 cm), a drill point web thickness in the range of 0.010 inches (0.0254 cm) to 0.015 inches (0.0381 cm), and a point cutting edge angle in a range of 109 to 111 degrees

6. The self-drilling self-tapping fastener (50) of Claim 5, wherein the drill point web thickness is 0.013 inches (0.03302 cm), and wherein the cutting edge center distance is 0.005 inches (0.0127 cm).

7. The self-drilling self-tapping fastener (50) of Claim 5, wherein the drill tip (380) has a drill point eccentricity of less than 0.005 inches (0.0127 cm).

8. The self-drilling self-tapping fastener (50) of Claim 5, wherein the drill tip (380) has a drill point eccentricity of 0.0023 inches (0.0058 cm).

9. The self-drilling self-tapping fastener (50) of Claim 1, wherein the drill tip (380) has a drill point eccentricity of less than 0.005 inches (0.00127 cm) and optionally, wherein the helical thread formation (400) has a thread engagement in a range of 0.018 to 0.019 inches (0.0457 to 0.0483 cm).

10. The self-drilling self-tapping fastener (50) of Claim 1, wherein the helical thread formation (400) has a thread engagement in a range of 0.018 to 0.019 inches (0.0457 to 0.0483 cm).

## Patentansprüche

1. Selbstbohrendes selbstschneidendes Befestigungselement (50), aufweisend:
einen Kopf (100);
einen Schaft (200), der integral mit dem Kopf verbunden ist und sich von diesem erstreckt, wobei der Schaft einen ersten Schaftabschnitt (220) und einen zweiten Schaftabschnitt (300) beinhaltet, wobei der zweite Schaftabschnitt eine sich in Längsrichtung erstreckende erste Nut (310) definiert, wobei der zweite Schaftabschnitt eine sich in Längsrichtung erstreckende zweite Nut (330) definiert, wobei der zweite Schaftabschnitt einen ersten Spanbrecher (350) beinhaltet, der in der ersten Nut positioniert ist, wobei der zweite Schaftabschnitt einen zweiten Spanbrecher (370) beinhaltet, der in der zweiten Nut positioniert ist, wobei der zweite Schaftabschnitt eine Bohrerspitze (380) beinhaltet, wobei die Bohrerspitze eine erste Schneidklinge (382) mit einer ersten Schneidkante (384) und eine zweite Schneidklinge (392) mit einer zweiten Schneidkante (394) beinhaltet, wobei die erste Schneidkante und die zweite Schneidkante aufeinander zu verjüngt sind; und
eine schraubenförmige Gewindeformation (400), die integral mit dem ersten Schaftabschnitt und einem Teil des zweiten Schaftabschnitts verbunden ist und sich davon radial nach außen erstreckt,
**dadurch gekennzeichnet, dass** sich die erste Nut (310) durch drei Gewindegänge der Gewindeformation (400) auf einer ersten Seite des zweiten Schaftabschnitts (300) erstreckt, jedoch nicht zu dem vierten Gewindegang auf der ersten Seite des zweiten Schaftabschnitts.

2. Selbstbohrendes selbstschneidendes Befestigungselement (50) nach Anspruch 1, wobei sich die zweite Nut (330) durch drei Gewindegänge der Gewindeformation (400) auf einer zweiten Seite des zweiten Schaftabschnitts (300) und zu, aber nicht durch eine vierte Gewindeformation auf der zweiten Seite des zweiten Schaftabschnitts erstreckt.

3. Selbstbohrendes selbstschneidendes Befestigungselement (50) nach Anspruch 1, wobei der zweite Schaftabschnitt (300) geschmiedet ist.

4. Selbstbohrendes selbstschneidendes Befestigungselement (50) nach Anspruch 1, wobei die erste Nut (310) eine sich in Längsrichtung erstreckende erste Fläche (312) und eine sich in Längsrichtung erstreckende zweite Fläche (320) beinhaltet, die sich entlang einer sich in Längsrichtung erstreckenden Verbindungslinie (318) treffen, wobei sich die erste Nut an einem ersten Ende (302) des zweiten Schaftabschnitts (300) fast zu einer Spitze verengt, sich zu einem zentralen Abschnitt des zweiten Schaftabschnitts hin erweitert und durch die Bohrerspitze (380) zu einem zweiten Ende (306) des zweiten Schaftabschnitts breit bleibt, wobei die zweite Nut (330) eine sich in Längsrichtung erstreckende erste Fläche (332) und eine sich in Längsrichtung erstreckende zweite Fläche (340) beinhaltet, die sich entlang einer sich in Längsrichtung erstreckenden Verbindungslinie (338) treffen, wobei sich die zweite Nut an dem ersten Ende des zweiten Schaftabschnitts fast zu einer Spitze verengt, sich zum zentralen Abschnitt des zweiten Schaftabschnitts hin erweitert und durch die Bohrerspitze zu dem zweiten Ende des zweiten Schaftabschnitts breit bleibt.

5. Selbstbohrendes selbstschneidendes Befestigungselement (50) nach Anspruch 1, wobei die Bohrerspitze (380) einen Schneidkantenmittenabstand im Bereich von 0,003 Zoll (0,00762 cm) bis 0,005 Zoll (0,0127 cm), eine Bohrerspitzenstegdicke im Bereich von 0,010 Zoll (0,0254 cm) bis 0,015 Zoll (0,0381 cm) und einen Spitzenschneidkantenwinkel in einem Bereich von 109 bis 111 Grad aufweist

6. Selbstbohrendes selbstschneidendes Befestigungselement (50) nach Anspruch 5, wobei die Bohrerspitzenstegdicke 0,013 Zoll (0,03302 cm) beträgt und wobei der Schneidkantenmittenabstand 0,005 Zoll (0,0127 cm) beträgt.

7. Selbstbohrendes selbstschneidendes Befestigungselement (50) nach Anspruch 5, wobei die Bohrerspitze (380) eine Bohrerspitzenexzentrizität von weniger als 0,005 Zoll (0,0127 cm) aufweist.

8. Selbstbohrendes selbstschneidendes Befestigungselement (50) nach Anspruch 5, wobei die Bohrerspitze (380) eine Bohrerspitzenexzentrizität von 0,0023 Zoll (0,0058 cm) aufweist.

9. Selbstbohrendes selbstschneidendes Befestigungselement (50) nach Anspruch 1, wobei die Bohrerspitze (380) eine Bohrerspitzenexzentrizität von weniger als 0,005 Zoll (0,00127 cm) aufweist und wobei die schraubenförmige Gewindeformation (400) einen Gewindeeingriff in einem Bereich von 0,018 bis 0,019 Zoll (0,0457 bis 0,0483 cm) aufweist.

10. Selbstbohrendes selbstschneidendes Befestigungselement (50) nach Anspruch 1, wobei die schraubenförmige Gewindeformation (400) einen Gewindeeingriff in einem Bereich von 0,018 bis 0,019 Zoll (0,0457 bis 0,0483 cm) aufweist.

## Revendications

1. Élément de fixation auto-perçant et auto-taraudeur (50) comprenant :
une tête (100) ;
une tige (200) reliée de manière solidaire à la tête et s'étendant à partir de celle-ci, la tige comportant une première portion de tige (220) et une deuxième portion de tige (300), la deuxième portion de tige définissant une première cannelure s'étendant longitudinalement (310), la deuxième portion de tige définissant une deuxième cannelure s'étendant longitudinalement (330), la deuxième portion de tige comportant un premier brise-copeaux (350) positionné dans la première cannelure, la deuxième portion de tige comportant un deuxième brise-copeaux (370) positionné dans la deuxième cannelure, la deuxième portion de tige comportant une pointe de foret (380), la pointe de foret comportant une première lame de coupe (382) ayant un premier bord de coupe (384) et une deuxième lame de coupe (392) ayant un deuxième bord de coupe (394) ; dans lequel le premier bord de coupe et le deuxième bord de coupe sont effilés l'un vers l'autre ; et
une formation de filetage hélicoïdal (400) reliée de manière solidaire à la première portion de tige et à une partie de la deuxième portion de tige et s'étendant radialement vers l'extérieur depuis celles-ci,
**caractérisé en ce que** la première cannelure (310) s'étend à travers trois filetages de la formation de filetage (400) sur un premier côté de la deuxième portion de tige (300), mais pas jusqu'au quatrième filetage sur le premier côté de la deuxième portion de tige.

2. Élément de fixation auto-perçant et auto-taraudeur (50) selon la revendication 1, dans lequel la deuxième cannelure (330) s'étend à travers trois filetages de la formation de filetage (400) sur un deuxième côté de la deuxième portion de tige (300) et jusqu'à, mais pas à travers une quatrième formation de filetage sur le deuxième côté de la deuxième portion de tige.

3. Élément de fixation auto-perçant et auto-taraudeur (50) selon la revendication 1, dans lequel la deuxième portion de tige (300) est forgée.

4. Élément de fixation auto-perçant et auto-taraudeur (50) selon la revendication 1, dans lequel la première cannelure (310) comporte une première surface s'étendant longitudinalement (312) et une deuxième surface s'étendant longitudinalement (320) qui se rencontrent le long d'une ligne de connexion s'étendant longitudinalement (318), dans lequel la première cannelure se rétrécit presque jusqu'à un bout au niveau d'une première extrémité (302) de la deuxième portion de tige (300), s'élargit vers une section centrale de la deuxième portion de tige, et reste large à travers la pointe de foret (380) jusqu'à une deuxième extrémité (306) de la deuxième portion de tige, dans lequel la deuxième cannelure (330) comporte une première surface s'étendant longitudinalement (332) et une deuxième surface s'étendant longitudinalement (340) qui se rencontrent le long d'une ligne de connexion s'étendant longitudinalement (338), dans lequel la deuxième cannelure se rétrécit presque jusqu'à un bout au niveau de la première extrémité de la deuxième portion de tige, s'élargit vers la section centrale de la deuxième portion de tige, et reste large à travers la pointe de foret jusqu'à la deuxième extrémité de la deuxième portion de tige.

5. Élément de fixation auto-perçant et auto-taraudeur (50) selon la revendication 1, dans lequel la pointe de foret (380) a une distance centrale de bord de coupe dans la plage de 0,003 pouce (0,00762 cm) à 0,005 pouce (0,0127 cm), une épaisseur de bande de bout de foret dans la plage de 0,010 pouce (0,0254 cm) à 0,015 pouce (0,0381 cm), et un angle de bord de coupe de bout dans une plage de 109 à 111 degrés

6. Élément de fixation auto-perçant et auto-taraudeur (50) selon la revendication 5, dans lequel l'épaisseur de bande de bout de foret est de 0,013 pouce (0,03302 cm), et dans lequel la distance centrale de bord de coupe est de 0,005 pouce (0,0127 cm).

7. Élément de fixation auto-perçant et auto-taraudeur (50) selon la revendication 5, dans lequel la pointe de foret (380) a une excentricité de bout de foret inférieure à 0,005 pouce (0, 0127 cm) .

8. Élément de fixation auto-perçant et auto-taraudeur (50) selon la revendication 5, dans lequel la pointe de foret (380) a une excentricité de bout de foret de 0,0023 pouce (0,0058 cm).

9. Élément de fixation auto-perçant et auto-taraudeur (50) selon la revendication 1, dans lequel la pointe de foret (380) a une excentricité de bout de foret inférieure à 0,005 pouce (0,00127 cm) et, facultativement, dans lequel la formation de filetage hélicoïdal (400) a une mise en prise de filetage dans une plage de 0,018 à 0,019 pouce (0,0457 à 0,0483 cm).

10. Élément de fixation auto-perçant et auto-taraudeur (50) selon la revendication 1, dans lequel la formation de filetage hélicoïdal (400) a une mise en prise de filetage dans une plage de 0,018 à 0,019 pouce (0,0457 à 0,0483 cm).
